Europäisches Patentamt

European Patent Office

Office européen des brevets

(19)

(11) **EP 1 051 768 B1**

(12) **EUROPÄISCHE PATENTSCHRIFT**

(45) Veröffentlichungstag und Bekanntmachung des Hinweises auf die Patenterteilung:
**04.10.2001 Patentblatt 2001/40**

(51) Int Cl.⁷: **H01M 8/10**, H01M 8/02, C23C 14/16

(21) Anmeldenummer: **99908740.6**

(22) Anmeldetag: **14.01.1999**

(86) Internationale Anmeldenummer:
**PCT/DE99/00108**

(87) Internationale Veröffentlichungsnummer:
**WO 99/39398 (05.08.1999 Gazette 1999/31)**

(54) **BRENNSTOFFZELLE MIT EINEM PROTONENLEITFÄHIGEN ELEKTROLYTEN**

FUEL CELL WITH A PROTON CONDUCTING ELECTROLYTE

PILE A COMBUSTIBLE A ELECTROLYTE CONDUCTEUR PROTONIQUE

(84) Benannte Vertragsstaaten:
**AT BE CH CY DE DK ES FI FR GB GR IE IT LI LU MC NL PT SE**

(30) Priorität: **28.01.1998 DE 19803132**

(43) Veröffentlichungstag der Anmeldung:
**15.11.2000 Patentblatt 2000/46**

(73) Patentinhaber: **FORSCHUNGSZENTRUM JÜLICH GMBH**
**52425 Jülich (DE)**

(72) Erfinder: **DOHLE, Hendrik**
**D-52249 Eschweiler (DE)**

(74) Vertreter: **Hublé, Jörn R.**
**Bungartz - Hublé & Partner,**
**Patent- und Rechtsanwälte,**
**Eupener Strasse 161 A**
**50933 Köln (DE)**

(56) Entgegenhaltungen:
**EP-A- 0 631 337      WO-A-96/29752**
**DE-C- 4 241 150**

## Beschreibung

Die Erfindung betrifft eine Brennstoffzelle mit einem protonenleitfähigen Elektrolyten, einer Anode und einer Kathode.

In Brennstoffzellen wird die in dem Brennstoff gespeicherte chemische Energie direkt in elektrische Energie und Wärme umgewandelt. Als Brennstoff kommt beispielsweise reiner Wasserstoff, Methanol oder Erdgas zum Einsatz, und der Brennstoff reagiert in der Brennstoffzelle mit dem Oxidans, meist reinem oder dem in Luft enthaltenen Sauerstoff. Bei dieser Reaktion wird neben elektrischem Strom und Wärme auch noch Wasser erzeugt, bei den kohlenstoffhaltigen Brennstoffen zudem Kohlendioxid. Brennstoff und Oxidans werden zusammen als Betriebsmittel bezeichnet.

Die einzelne Brennstoffzelle weist eine Anode und eine Kathode auf, zwischen denen der Elektrolyt angeordnet ist. Der Brennstoff wird dem vor der Anode liegenden Anodengasraum, das Oxidans dem vor der Kathode liegenden Kathodengasraum der Brennstoffzelle kontinuierlich zugeführt, die Reaktionsprodukte werden kontinuierlich abgeführt. Die verschiedenen Typen von Brennstoffzellen werden gewöhnlich anhand des verwendeten Elektrolyten eingeteilt. Elektrolyten, die für Protonen leitfähig sind, werden in Brennstoffzellen eingesetzt, bei denen an der Anode aus dem Brennstoff Protonen unter Freisetzung von Elektronen abgespalten werden. Die Protonen wandern durch den protonenleitfähigen Elektrolyten zu der Kathode, wo sie mit dem Sauerstoff unter Aufnahme von Elektronen zu Wasser reagieren.

Ein Beispiel für derartige Brennstoffzellen ist die sogenannte Polymermembran-Brennstoffzelle, die als Elektrolyt eine Membran aus perfluoriertem Kunststoff verwendet. Derzeit werden überwiegend semipermeable Membranen auf der Basis von Poly(perfluoralkylen)sulfonsäure, wie zum Beispiel Nafion® R 117 von Du Pont eingesetzt. Zur Herstellung der Brennstoffzelle wird die eine Fläche der Elektrolytmembran mit dem Anodenmaterial, das in der Regel Platin oder eine Platin-Ruthenium-Legierung ist, und die gegenüberliegende Fläche mit dem Kathodenmaterial, das bevorzugt Platin ist, beschichtet.

Die Polymermembran-Brennstoffzelle kann mit Wasserstoff oder Methanol betrieben werden. Bei Verwendung von Methanol wird sie dann auch als Direkt-Methanol-Brennstoffzelle bezeichnet. Die Elektrodenreaktionen der mit Wasserstoff betriebenen Polymermembran-Brennstoffzelle lauten:

$$\text{Anode:} \quad H_2 \rightarrow 2H^+ + 2\ e^-$$

$$\text{Kathode:} \quad O_2 + 4H^+ + 4e^- \rightarrow 2\ H_2O$$

Die Elektrodenreaktionen der Direkt-Methanol-Brennstoffzelle lauten:

$$\text{Anode:} \quad CH_3OH + H_2O \rightarrow CO_2 + 6\ H^+ + 6\ e^-$$

$$\text{Kathode:} \quad O_2 + 4\ H^+ + 4\ e^- \rightarrow 2\ H_2O$$

Ein Nachteil dieser bekannten Polymermembran-Brennstoffzellen besteht darin, daß die Elektrolytmembran nicht nur die Protonen durchläßt, sondern auch, allerdings in geringerem Umfang, den Brennstoff, also den molekularen Wasserstoff ($H_2$) oder die Methanolmoleküle ($CH_3OH$). Dies führt zu einer Verringerung des Wirkungsgrads der Brennstoffzelle. Bei der Direkt-Methanol-Brennstoffzelle wird dieser unerwünschte Effekt noch dadurch verschlimmert, daß auch das sowohl auf Anoden- als auch Kathodenseite vorhandene Wasser ($H_2O$) in die Nafion-Folie eindringt, so daß diese aufquillt und noch mehr Methanol durchläßt.

Es ist Aufgabe der Erfindung, bei einer Brennstoffzelle der eingangs genannten Art die Wanderung des Brennstoffs von der Anodenseite zur Kathodenseite durch den protonenleitfähigen Elektrolyten hindurch zu verhindern.

Diese Aufgabe wird dadurch gelöst, daß die Brennstoffzelle wenigstens einen wasserstoffdurchlässigen Sperrschichtverbund aufweist, der zwei Außenschichten und eine zwischen diesen angeordnete Kernschicht umfaßt, daß jede Außenschicht im wesentlichen aus Palladium und/oder einer Legierung auf Basis von Palladium besteht, und daß die Kernschicht im wesentlichen aus Niob und/oder Tantal und/oder einer Legierung auf Basis eines dieser Metalle besteht.

Der erfindungsgemäße Sperrschichtverbund besteht im wesentlichen aus den Metallen Palladium, Niob und Tantal, die ein hohes Diffusionsvermögen für atomaren Wasserstoff aufweisen, andererseits aber für größere Atome und Moleküle, insbesondere molekularen Wasserstoff, Wasser und Methanol undurchlässig sind. Er dient dazu, den Anodengasraum von dem Kathodengasraum so zu trennen, daß der Brennstoff nicht durch den Elektrolyten von der Anodenseite zur Kathodenseite wandern kann. Die Aufnahme des Wasserstoffs in das Metallgitter erfolgt unter Metallhydrid-Bildung.

Dem dreischichtigen Aufbau liegen die folgenden Überlegungen zugrunde: Tantal weist ein Diffusionsvermögen für Wasserstoffatome auf, das über dem von Palladium liegt. Andererseits wird für den Übergang des Wasserstoffs aus der Gasphase in die Hydridphase bei Palladium eine niedrigere Energie benötigt als bei Tantal. Palladium ist allerdings teurer als Tantal. Diese Zusammenhänge gelten auch für Niob, das chemisch mit Tantal verwandt ist. Der erfindungsgemäße Sperrschichtverbund ist billiger als eine Diffusionsschicht, die überwiegend aus Palladium besteht, da die Außenschichten sehr dünn gemacht werden können, und er nimmt den Wasserstoff leichter auf als eine Diffusionsschicht, die überwiegend aus Tantal und/oder Niob besteht. Die beiden Außenschichten, die überwiegend aus Palladium bestehen, sorgen aufgrund der niedrigen Übergangsenergie für eine leichte Aufnahme des Wasserstoffs aus der Gasphase in die Außenschicht, der anschließende Übergang von der Außenschicht in die Kernschicht erfordert nur eine sehr viel niedrigere Energie als der Übergang aus der Gasphase in Tantal oder Niob. Da das Material der Kernschicht verhältnismäßig billig ist, kann diese nahezu beliebig dick gemacht werden und somit für die Stabilität des Sperrschichtverbunds sorgen.

Vorteilhafte Ausbildungen sind in den Unteransprüchen beschrieben.

Für die Anordnung jedes Sperrschichtverbunds relativ zum Elektrolyten kommen verschiedene Möglichkeiten in Frage.

Eine erste Variante besteht darin, daß daß der Elektrolyt zwei Lagen umfaßt, zwischen denen ein Sperrschichtverbund angeordnet ist. Diese Anordnung hat den Vorteil, daß der Elektrolyt, der in seinem Inneren den Sperrschichtverbund enthält, genauso wie ein herkömmlicher Elektrolyt ohne Sperrschichtverbund mit den Elektrodenmaterialien beschichtet werden kann.

In einer zweiten Variante ist vorgesehen, ein Sperrschichtverbund zwischen einer der Elektroden und dem Elektrolyten angeordnet ist.

In einer dritten Variante ist vorgesehen, daß wenigstens eine der Elektroden als Sperrschichtverbund ausgebildet ist. So kann beispielsweise die Anode durch einen erfindungsgemäßen Sperrschichtverbund ersetzt werden, der ihre Funktion ausübt, so daß im Unterschied zu der ersten und zweiten Variante auf eine gesonderte, also zusätzlich zu dem Sperrschichtverbund vorhandene Anodenschicht verzichtet werden kann.

Der Sperrschichtverbund kann neben den erwähnten drei Schichten auch noch weitere Schichten aufweisen, die auf der Anoden- und/oder Kathodenseite zwischen der jeweiligen Außenschicht und der Kernschicht angeordnet sind. Das Material dieser zusätzlichen Zwischenschichten kann beispielsweise im Hinblick darauf ausgewählt werden, den Übergang des Wasserstoffs von der anodenseitigen Außenschicht in die Kernschicht bzw. von der Kernschicht in die kathodenseitige Außenschicht zu erleichtern.

In einer ersten Alternative besteht die Zwischenschicht im wesentlichen aus einer Legierung, die im wesentlichen den Hauptbestandteil der benachbarten Außenschicht und den Hauptbestandteil der Kernschicht enthält. Wenn also die beiden Außenschichten aus einer Palladiumlegierung und die Kernschicht aus einer Nioblegierung bestehen, dann kann beispielsweise zwischen jeder Außenschicht und der Kernschicht eine Zwischenschicht angeordnet sein, die im wesentlichen aus einer Palladium-Niob-Legierung besteht.

In einer zweiten Alternative besteht die Zwischenschicht im wesentlichen aus einer Mischung, die im wesentlichen das Material der benachbarten Außenschicht und das Material der Kernschicht enthält. Die Zwischenschicht kann also nicht nur als Legierung vorliegen, sondern auch in einer anderen, von dem eingesetzten Herstellungsverfahren abhängenden Form. Die Zwischenschicht kann beispielsweise durch Sputtering auf die Kernschicht aufgebracht werden, wobei für das Sputtering in einem ersten Schritt das Material der Kernschicht und in einem zweiten Schritt das Material der Außenschicht verwendet wird.

Eine dritte Alternative bezieht sich auf den Fall, daß die Kernschicht im wesentlichen aus Tantal und/oder einer Legierung auf Basis von Tantal besteht, und sie sieht vor, daß die Zwischenschicht im wesentlichen aus Niob und/oder Vanadium und/oder einer Legierung auf Basis eines dieser Metalle und/oder einer Palladium-Tantal-Legierung besteht. Die Zwischenschicht kann folglich Metalle aufweisen, die nicht in der Kernschicht und der Außenschicht enthalten sind.

Vorteilhafterweise bestehen die Außenschichten im wesentlichen aus einer Palladium-Silber-Legierung, bevorzugt mit einem Silberanteil von wenigstens 25 Gew.-%. Eine Palladium-Folie bläht sich nämlich bei Aufnahme von Wasserstoff merklich auf und wird spröde und rissig. Die Dimensionsstabilität wird durch den Zusatz von Silber verbessert.

Die Kernschicht ist bevorzugt eine Folie. Die übrigen Schichten können durch Beschichtung nacheinander auf die Kernschicht aufgebracht werden. Die Beschichtung kann durch Sputtering, Pulverbeschichtung, Aufdampfen und dergleichen erfolgen. Auch die übrigen Schichten können Folien sein. In diesem Fall kann das Aufbringen dieser Folienschichten durch Kaschieren erfolgen.

Da die Kernschicht aus einem Material besteht, das im Vergleich zu den Außenschichten zwar eine höhere Übergangsenergie, dafür aber auch ein besseres Diffusionsvermögen für Wasserstoff aufweist, kann sie dicker als jede der übrigen Schichten sein und so für die gewünschte Stabilität des Sperrschichtverbundes, der Elektrolytmembran oder gar der gesamten Brennstoffzelle sorgen.

Im folgenden werden bevorzugte Ausführungsformen der Erfindung beispielhaft anhand der beigefügten Zeichnungen näher beschrieben.

FIG. 1 ist ein schematischer Querschnitt durch eine Polymermembran-Brennstoffzelle in einer ersten Ausführungsform;

FIG. 2 ist ein schematischer Querschnitt durch eine Polymermembran-Brennstoffzelle in einer zweiten Ausführungsform;

FIG. 3 ist ein schematischer Querschnitt durch eine Polymermembran-Brennstoffzelle in einer dritten Ausführungsform; und

FIG. 4 und 5 zeigen in einem vergrößerten Ausschnitt Abwandlungen des Sperrschichtverbunds der in den FIG. 1 bis 3 gezeigten Brennstoffzellen.

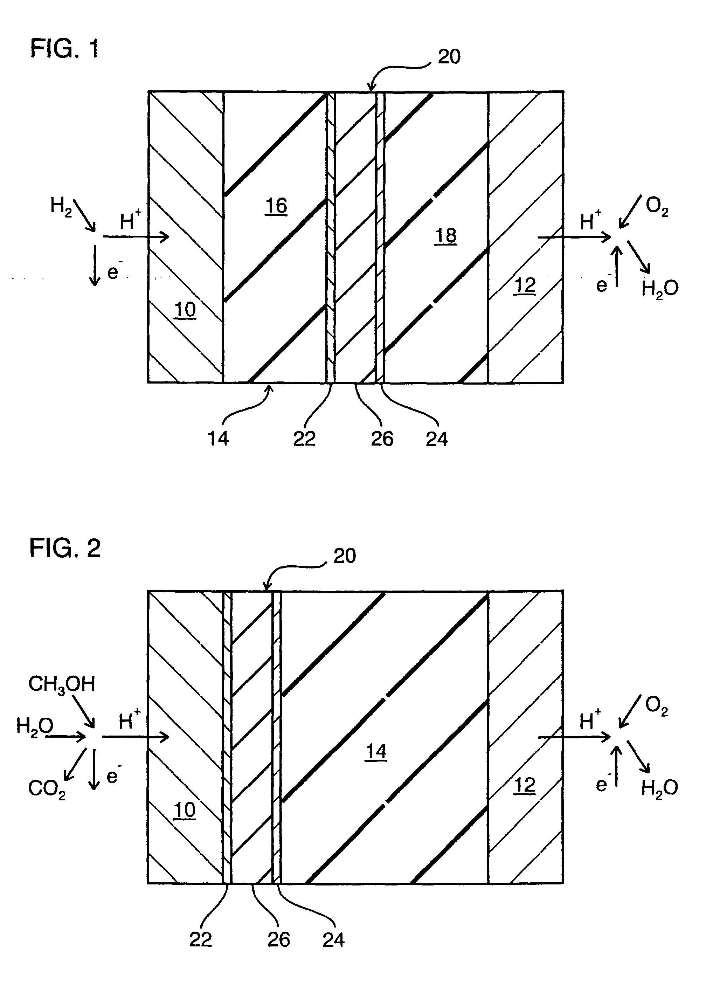

Die FIG. 1 zeigt schematisch den Aufbau einer Polymermembran-Brennstoffzelle in einer ersten Ausführungsform. Die Brennstoffzelle weist eine Anode 10 und eine Kathode 12 sowie einen zwischen diesen liegenden Elektrolyten 14 auf. Links von der Anode 10 befindet sich der sogenannte Anodengasraum und rechts von der Kathode 12 der Kathodengasraum. Der Elektrolyt 14 ist eine protonenleitende Membran in Gestalt einer Folie aus Nafion® R 117, die auf ihrer in der FIG. 1 linken Seite mit der Anode 10 und auf ihrer rechten Seite mit der Kathode 12 beschichtet ist. Für die Elektroden 10, 12 werden katalytische Materialien verwendet, die im Hinblick auf die an den Elektroden 10, 12 stattfindenden Reaktionen, beispielsweise die Abspaltung von Protonen an der Anode 10 und die Rekombination und Reaktion der Protonen zu Wasser an der Kathode 12, ausgewählt sind. Als Materialien kommen vor allem Edelmetalle in Frage, bevorzugt werden Platin und Gold, für die Anode 10 auch Platin-Ruthenium-Legierungen. Das Elektrodenmaterial wird in der Regel naßchemisch auf der Elektrolytmembran 14 abgeschieden oder als Pulver mit dieser heißverpreßt. Der Elektrolyt 14 ist ungefähr 200 µm dick, die Elektroden 10, 12 sind jeweils ungefähr 100 µm dick.

Bei der in der FIG. 1 gezeigten ersten Ausführungsform der Brennstoffzelle ist der Elektrolyt 14 in zwei gleich große Lagen 16, 18 unterteilt, zwischen denen ein Sperrschichtverbund 20 liegt. Folglich trennt der Sperrschichtverbund 20 den Anodengasraum vom Kathodengasraum ab. Der Verbund 20 besteht aus zwei Außenschichten 22, 24 sowie einer zwischen diesen liegenden Kernschicht 26. Jede Außenschicht 22, 24 besteht aus Palladium und ist ungefähr 0,5 µm dick, die Kernschicht 26 hingegen ist eine ungefähr 50 bis 100 µm dicke Folie aus Tantal. Zur Herstellung des Verbunds 20 wurden die Außenschichten 22, 24 durch Sputtering auf die Kernschichtfolie 26 aufgebracht.

Die Dicke des Sperrschichtverbunds 20 ist im Hinblick auf die Sperrfunktion ausgewählt, wobei aus Kostengründen - Palladium ist teurer als Tantal - die Kernschicht 26 im Vergleich zu den Außenschichten 22, 24 möglichst dick sein soll. Die Außenschichten 22, 24 müssen wenigstens so dick sein, daß die Wasserstoffatome möglichst leicht in die Kernschicht 26 eintreten und diese auf der anderen Seite wieder verlassen können.

An Hand der in der FIG. 1 gezeigten Ausführungsform einer Brennstoffzelle wird nun die Funktionsweise einer mit Wasserstoff betriebenen Polymermembran-Brennstoffzelle beschrieben.

Dem Anodengasraum wird kontinuierlich molekularer Wasserstoff $H_2$ als Brennstoff zugeführt. An der Anode 10 wird ein Wasserstoffmolekül $H_2$ katalytisch in zwei Protonen $H^+$ und zwei Elektronen $e^-$ aufgespalten. Die Elektronen $e^-$ werden durch einen nicht dargestellten Stromabnehmer zu einem ebenfalls nicht dargestellten elektrischen Verbraucher geführt. Sie gelangen von dem Verbraucher über einen nicht dargestellten zweiten Stromabnehmer zu der Kathode 12.

Die an der Anode 10 erzeugten Protonen $H^+$ treten in die anodenseitige Elektrolytlage 16 ein und wandern durch diese bis zu der anodenseitigen Außenschicht 22. Dort rekombinieren sie mit Elektronen $e^-$ zu Wasserstoffatomen H, die unter Bildung von Palladiumhydrid von der Außenschicht 22 aufgenommen werden. Die für die Rekombination erforderlichen Elektronen $e^-$ stammen von der kathodenseitigen Außenschicht 24, wie weiter unten erklärt werden wird, und sind durch die Kernschicht 26 gewandert.

Die in dem Palladium der Außenschicht 22 gelösten Wasserstoffatome H diffundieren durch das Metallgitter bis zu der Grenzfläche mit der Kernschicht 26, wo sie unter Bildung von Tantalhydrid in diese eintreten. Sie diffundieren durch die Kernschicht 26 hindurch, weiter unter Umwandlung in Tantalhydrid in die kathodenseitige Außenschicht 24 hinein und verlassen diese unter Aufspaltung in Protonen $H^+$ und Elektronen $e^-$ in die kathodenseitige Elektrolytlage 18 hinein. Diese Elektronen $e^-$ wandern, wie oben erwähnt, durch die kathodenseitige Außenschicht 24 und die Kernschicht 26 zu der anodenseitigen Außenschicht 22. Die Protonen $H^+$ gelangen durch die kathodenseitige Elektrolytlage 18 zu der Kathode 12, an der sie sich mit den über den äußeren Verbraucherkreis zugeführten Elektronen $e^-$ und dem Sauerstoff $O_2$, der dem Kathodengasraum kontinuierlich zugeführt wird, zu Wasser $H_2O$ verbinden. Das Reaktionsprodukt Wasser $H_2O$ wird kontinuierlich aus dem Kathodengasraum abgeleitet.

Der Sperrschichtverbund 20 läßt also nur atomaren Wasserstoff H durch, während er für den molekularen Wasserstoff $H_2$ als Sperre dient.

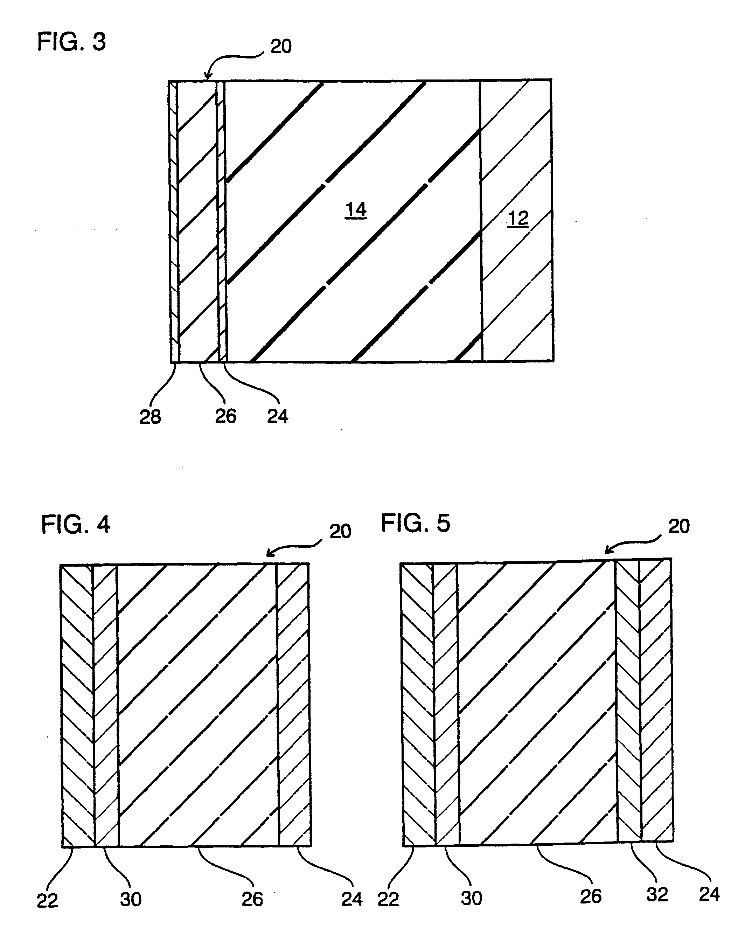

Neben der in der FIG. 1 gezeigten Anordnung des Sperrschichtverbunds 20 innerhalb des Elektrolyten 14 sind auch andere Anordnungen möglich, bei denen der Sperrschichtverbund 20 an der anodenseitigen oder der kathodenseitigen Außenfläche des Elektrolyten 14 angeordnet ist, wie im folgenden an Hand der FIG. 2 und 3 näher beschrieben wird.

In der FIG. 2 ist eine Polymermembran-Brennstoffzelle in einer entsprechenden zweiten Ausführungsform dargestellt, bei der der Sperrschichtverbund 20 an der Anodenseite eines einlagigen Elektrolyten 14 angebracht ist. Diese Anordnung ist besonders für die Direkt-Methanol-Brennstoffzelle geeignet, da hierdurch vermieden wird, daß das dem Anodengasraum zugeführte Wasser $H_2O$ in den Elektrolyten 14 eindringt und dieser aufquillt. Wie zu erkennen ist, grenzt an die Anode 10 zunächst die anodenseitige Außenschicht 22 an, und erst an die kathodenseitige Außenschicht 24 grenzt der Elektrolyt 14 an.

An Hand der in der FIG. 2 gezeigten Ausführungsform einer Brennstoffzelle wird nun die Funktionsweise einer Direkt-Methanol-Brennstoffzelle beschrieben.

Dem Anodengasraum werden kontinuierlich Methanol $CH_3OH$ und Wasser $H_2O$ zugeführt, die an der Anode zu Kohlendioxid $CO_2$, Protonen $H^+$ und Elektronen $e^-$ reagieren. Die Elektronen $e^-$ werden, wie bereits zuvor in Zusammenhang mit der Fig. 1 beschrieben wurde, durch einen nicht dargestellten Verbraucherstromkreis zu der Kathode 12 geleitet. Die Protonen $H^+$ treten unter Rekombination mit Elektronen $e^-$, die von der kathodenseitigen Außenschicht 24 stammen, unter Hydridbildung in die anodenseitige Außenschicht 22 ein, diffundieren, wie zuvor beschrieben, durch den Sperrschichtverbund 20 und gelangen als Protonen $H^+$ unter Abspaltung von Elektronen $e^-$ von der kathodenseitigen Außenschicht 24 in den Elektrolyten 14. Die Protonen $H^+$ wandern durch den Elektrolyten 14 zur Kathode 12, wo sie mit den Elektronen $e^-$ aus dem Verbraucherkreis und mit dem dem Kathodengasraum kontinuierlich zugeführten Sauerstoff $O_2$ zu Wasser $H_2O$ reagieren, das kontinuierlich abgeleitet wird.

Der Sperrschichtverbund 20 läßt also nur atomaren Wasserstoff H durch, während er für größere Moleküle, also insbesondere Methanol $CH_3OH$ und Wasser $H_2O$ als Sperre zwischen den beiden Gasräumen dient.

Die in der FIG. 2 dargestellte Brennstoffzelle kann wie folgt hergestellt werden. Auf die Kernschicht 26 werden zunächst die beiden Außenschichten 22, 24, beispielsweise durch Sputtering, aufgebracht. Dann wird auf die anodenseitige Außenschicht 22 die Anode 10 aufgebracht, was ebenfalls durch Sputtering erfolgen kann. Auf die kathodenseitige Außenschicht 24 wird der Elektrolyt 14 aufgebracht. Die der Außenschicht 24 gegenüberliegende Fläche des Elektrolyten 14 wird mit der Kathode 12 beschichtet, beispielsweise durch Sputtering oder chemische Naßabscheidung.

Die FIG. 3 zeigt eine Polymermembran-Brennstoffzelle in einer dritten Ausführungsform, die eine Abwandlung der in der FIG. 2 gezeigten Brennstoffzelle darstellt. Die Abwandlung besteht darin, daß die Anodenschicht 10 der Brennstoffzelle der FIG. 2 fehlt und statt dessen die anodenseitige Außenschicht 22 der FIG. 2 als Anode dient; es sind sozusagen die Außenschicht 22 der FIG. 2 und die Anode 10 der FIG. 2 in einer Kombinationsschicht 28 zusammengefaßt. Diese Kombinationsschicht 28 besteht im wesentlichen aus einer Mischung, die als erste Komponente das Material der Anode 10 der FIG. 2, also beispielsweise Platin, und als zweite Komponente das Material der Außenschicht 22 der FIG. 2, also beispielsweise Palladium, enthält. Die Mischung kann eine Legierung dieser Metalle sein, es sind aber auch andere Mischungstypen möglich. Die Kombinationsschicht 28 kann durch Sputtering auf die Kernschicht 26 aufgebracht werden, wobei als Targetmaterial eine Platin-Palladium-Legierung verwendet wird.

Die Außenschicht 22 kann aber auch unverändert, also ohne Zusatz von Platin als Anode eingesetzt werden, da die Anodenreaktionen auch mit Palladium als Katalysator ablaufen.

Die zuvor in Zusammenhang mit der FIG. 3 beschriebene Abwandlung läßt sich auch analog auf die Kathodenseite übertragen. Dann dient die kathodenseitige Außenschicht 24 der FIG. 2, allein oder als Kombinationsschicht, als Kathode.

Es wird darauf hingewiesen, daß die beiden Außenschichten 22, 24 auch aus unterschiedlichen Materialien bestehen können. So kann beispielsweise der Gehalt an Palladium unterschiedlich sein, oder es kann die eine Außenschicht aus Palladium und die andere aus einer Palladium-Silber-Legierung bestehen. Auch die Kernschicht 26 muß nicht unbedingt Tantal als Hauptbestandteil aufweisen. Für den Hauptbestandteil kommen auch Niob oder eine Mischung aus Tantal und Niob, sowie Niob-, Tantal- und Niob-Tantal-Legierungen in Frage. Die Kernschicht 26 kann auch Zusätze von in den Außenschichten 22, 24 enthaltenen Stoffen aufweisen. Des weiteren kann zwischen jeder Außenschicht 22, 24 und der Kernschicht 26 wenigstens eine weitere Zwischenschicht liegen.

In der FIG. 4 ist eine Abwandlung des Sperrschichtverbunds 20 gezeigt, der bei den in den FIG. 1, 2 und 3 dargestellten Brennstoffzellen verwendet wird. Zwischen der Kernschicht 26 und der anodenseitigen Außenschicht 22 ist eine Zwischenschicht 30 angeordnet. Die Zwischenschicht 30 kann im wesentlichen aus einer Legierung bestehen, die im wesentlichen den Hauptbestandteil der benachbarten, anodenseitigen Außenschicht 22 und den Hauptbestandteil der Kernschicht 26 enthält, sie kann aber auch im wesentlichen aus einer Mischung bestehen, die im wesentlichen das Material der benachbarten, anodenseitigen Außenschicht 22 und das Material der Kernschicht 26 enthält. Wenn also beispielsweise die Kernschicht 26 aus einer Tantallegierung und die anodenseitige Außenschicht 22 aus einer Palladium-Silber-Legierung besteht, dann kann das Material für die Zwischenschicht 30 eine Palladium-Tantal-Legierung sein, aber auch beispielsweise eine Mischung, bevorzugt Legierung, aus der Palladium-Silber-Legierung und der Tantallegierung.

Für die Zwischenschicht 30 kommen aber auch andere Materialien in Frage, solange sie ein ausreichendes Diffusionsvermögen für die Wasserstoffatome bieten. So kann für die Kernschicht 26 und die Außenschicht 22 des vorigen Beispiels die Zwischenschicht 30 auch im wesentlichen aus Niob oder einer Nioblegierung oder Vanadium oder einer Vanadiumlegierung oder einer Mischung, vorzugsweise Legierung, aus zwei oder mehr dieser Stoffe sein. Auch zwischen der kathodenseitigen Außenschicht 24 und der Kernschicht 26 können auf ähnliche Art und Weise Zwischenschichten 32 angeordnet sein, wie in der FIG. 5 dargestellt ist.

**Patentansprüche**

1. Brennstoffzelle mit einem protonenleitfähigen Elektrolyten (14), einer Anode (10) und einer Kathode (12), **dadurch gekennzeichnet, daß** sie wenigstens einen wasserstoffdurchlässigen Sperrschichtverbund (20) aufweist, der zwei Außenschichten (22, 24) und eine zwischen diesen angeordnete Kernschicht (26) umfaßt, **daß** jede Außenschicht (22, 24) aus Palladium und/oder einer Legierung auf Basis von Palladium besteht, und **daß** die Kernschicht (26) aus Niob und/oder Tantal und/oder einer Legierung auf Basis eines dieser Metalle besteht, wobei der Sperrschichtverbund (20) in der Brennstoffzelle verhindert, **daß** Brennstoff durch den protonleitfähigen Elektrolyten (14) von der Anodenseite zur Kathodenseite wandert.

2. Brennstoffzelle nach Anspruch 1, **dadurch gekennzeichnet, daß** der Elektrolyt (14) zwei Lagen (16, 18) umfaßt, zwischen denen ein Sperrschichtverbund (20) angeordnet ist.

3. Brennstoffzelle nach Anspruch 1 oder 2, **dadurch gekennzeichnet, daß** ein Sperrschichtverbund (20) zwischen einer der Elektroden (10, 12) und dem Elektrolyten (14) angeordnet ist.

4. Brennstoffzelle nach einem der vorhergehenden Ansprüche, **dadurch gekennzeichnet, daß** wenigstens eine der Elektroden (10, 12) als Sperrschichtverbund (20) ausgebildet ist.

5. Brennstoffzelle nach einem der vorhergehenden Ansprüche, **dadurch gekennzeichnet, daß** zumindest zwischen einer der Außenschichten (22, 24) und der Kernschicht (26) wenigstens eine Zwischenschicht (30, 32) angeordnet ist.

6. Brennstoffzelle nach Anspruch 5, **dadurch gekennzeichnet, daß** die Zwischenschicht (30, 32) aus einer Legierung besteht, die den Hauptbestandteil der benachbarten Außenschicht (22, 24) und den Hauptbestandteil der Kernschicht (26) enthält.

7. Brennstoffzelle nach Anspruch 5, **dadurch gekennzeichnet, daß** die Zwischenschicht (30, 32) aus einer Mischung besteht, die das Material der benachbarten Außenschicht (22, 24) und das Material der Kernschicht (26) enthält.

8. Brennstoffzelle nach Anspruch 5, **dadurch gekennzeichnet, daß** die Kernschicht (26) aus Tantal und/oder einer Legierung auf Basis von Tantal besteht, und **daß** die Zwischenschicht (30, 32) aus Niob und/oder Vanadium und/oder einer Legierung auf Basis eines dieser Metalle und/oder einer Palladium-Tantal-Legierung besteht.

9. Brennstoffzelle nach einem der vorhergehenden Ansprüche, **dadurch gekennzeichnet, daß** wenigstens eine der Außenschichten (22, 24) aus einer Palladium-Silber-Legierung besteht.

10. Brennstoffzelle nach Anspruch 9, **dadurch gekennzeichnet, daß** der Gehalt an Silber wenigstens 25 Gew.-% beträgt.

11. Brennstoffzelle nach einem der vorhergehenden Ansprüche, **dadurch gekennzeichnet, daß** die Kernschicht (26) eine Folie ist.

12. Brennstoffzelle nach einem der vorhergehenden Ansprüche, **dadurch gekennzeichnet, daß** wenigstens eine der Außenschichten (22, 24) eine Folie ist.

13. Brennstoffzelle nach einem der vorhergehenden Ansprüche, **dadurch gekennzeichnet, daß** die Kernschicht (26) dicker als jede der übrigen Schichten (22, 24, 30, 32) ist.

**Claims**

1. Fuel cell with a proton conducting electrolyte (14), an anode (10) and a cathode (12), **characterized in that** it comprises at least one hydrogen permeable barrier layer composite (20) comprising two outer layers (22, 24) and a core layer (26) arranged there between, **in that** each outer layer (22, 24) is made of palladium and/or an alloy on the basis of palladium, and **in that** the core layer (26) is made of niobium and/or tantalum and/or an alloy on the basis of one of these metals, the barrier layer composite (20) preventing in the fuel cell that the fuel migrates through the proton conducting electrolyte (14) from the anode side to the cathode side.

2. Fuel cell according to claim 1, **characterized in that** the electrolyte (14) comprises two plies (16, 18) between which is arranged a barrier layer composite (20).

3. Fuel cell according to claim 1 or 2, **characterized in that** a barrier layer composite (20) is arranged between one of the electrodes (10, 12) and the electrolyte (14).

4. Fuel cell according to one of the preceding claims, **characterized in that** at least one of the electrodes (10, 12) is formed as a barrier layer composite (20).

5. Fuel cell according to one of the preceding claims, **characterized in that** at least one intermediate layer (30, 32) is arranged at least between one of the outer layers (22, 24) and the core layer (26).

6. Fuel cell according to claim 5, **characterized in that** the intermediate layer (30, 32) is made of an alloy which contains the main component of the adjoining outer layer (22, 24) and the main component of the core layer (26).

7. Fuel cell according to claim 5, **characterized in that** the intermediate layer (30, 32) is made of a mixture which contains the material of the adjoining outer layer (22, 24) and the material of the core layer (26).

8. Fuel cell according to claim 5, **characterized in that** the core layer (26) is made of tantalum and/or an alloy on the basis of tantalum, and **in that** the intermediate layer (30, 32) is made of niobium and/or vanadium and/or an alloy on the basis of one of these metals and/or a palladium-tantalum alloy.

9. Fuel cell according to one of the preceding claims, **characterized in that** at least one of the outer layers (22, 24) is made of a palladium-silver alloy.

10. Fuel cell according to claim 9, **characterized in that** the content of silver is at least 25% by weight.

11. Fuel cell according to one of the preceding claims, **characterized in that** the core layer (26) is a foil.

12. Fuel cell according to one of the preceding claims, **characterized in that** at least one of the outer layers (22, 24) is a foil.

13. Fuel cell according to one of the preceding claims, **characterized in that** the core layer (26) is thicker than each of the other layers (22, 24, 30, 32).

## Revendications

1. Pile à combustible comprenant un électrolyte conducteur protonique (14), une anode (10) et une cathode (12), **caractérisée en ce qu'**elle présente au moins un composite à couche d'arrêt (20) perméable à l'hydrogène, qui comprend deux couches externes (22, 24) et une couche centrale (26) disposée entre celles-ci, **en ce que** chaque couche externe (22, 24) se compose de palladium et/ou d'un alliage à base de palladium, et **en ce que** la couche centrale (26) se compose de niobium et/ou de tantale et/ou d'un alliage à base de l'un de ces métaux, le composite à couche d'arrêt (20) de la pile à combustible empêchant le combustible de migrer à travers l'électrolyte (14) conducteur protonique de l'anode vers la cathode.

2. Pile à combustible selon la revendication 1, **caractérisée en ce que** l'électrolyte (14) comprend deux couches (16, 18) entre lesquelles est disposé un composite à couche d'arrêt (20).

3. Pile à combustible selon la revendication 1 ou 2, **caractérisée en ce qu'**un composite à couche d'arrêt (20) est disposé entre l'une des électrodes (10, 12) et l'électrolyte (14).

4. Pile à combustible selon l'une quelconque des revendications précédentes, **caractérisée en ce que** l'une au moins des électrodes (10, 12) est conformée comme un composite à couche d'arrêt (20).

5. Pile à combustible selon l'une quelconque des revendications précédentes, **caractérisée en ce qu'**au moins une couche intermédiaire (30, 32) est disposée au moins entre l'une des couches externes (22, 24) et la couche centrale (26).

6. Pile à combustible selon la revendication 5, **caractérisée en ce que** la couche intermédiaire (30, 32) se compose d'un alliage contenant le composant principal de la couche externe (22, 24) voisine et le composant principal de la couche centrale (26).

7. Pile à combustible selon la revendication 5, **caractérisée en ce que** la couche intermédiaire (30, 32) se compose d'un mélange contenant le matériau de la couche externe (22, 24) voisine et le matériau de la couche centrale (26).

8. Pile à combustible selon la revendication 5, **caractérisée en ce que** la couche centrale (26) se compose de tantale et/ou d'un alliage à base de tantale, et **en ce que** la couche intermédiaire (30, 32) se compose de niobium et/ou de vanadium et/ou d'un alliage à base de l'un de ces métaux et/ou d'un alliage de palladium et de tantale.

9. Pile à combustible selon l'une quelconque des revendications précédentes, **caractérisée en ce que** l'une au moins des couches externes (22, 24) se compose d'un alliage de palladium et d'argent.

10. Pile à combustible selon la revendication 9, **caractérisée en ce que** la teneur en argent est d'au moins 25 % du poids.

11. Pile à combustible selon l'une quelconque des revendications précédentes, **caractérisée en ce que** la couche centrale (26) est une feuille.

**12.** Pile à combustible selon l'une quelconque des revendications précédentes, **caractérisée en ce que** l'une au moins des couches externes (22, 24) est une feuille.

**13.** Pile à combustible selon l'une quelconque des revendications précédentes, **caractérisée en ce que** la couche centrale (26) est plus épaisse que les autres couches (22, 24, 30, 32).

FIG. 1

FIG. 2

FIG. 3

FIG. 4

FIG. 5